# EUROPEAN PATENT APPLICATION

(11) **EP 3 291 331 A1**
(43) Date of publication of application: **07.03.2018**
(21) Application number: 17188973.6
(22) Date of filing: 01.09.2017
(51) Int. Cl.: H01M 2/10, H01M 2/30, H01M 2/34, H01M 10/48

(54) **RECHARGEABLE BATTERY PACK**

(30) Priority: 01.09.2016 CN 201610800634
(71) Applicant: CONTA S.R.O, 441 00 Podborany (CZ)
(72) Inventor: GUO, Cang Hai, Suzhou (CN); BARLOTTI, Davide, Suzhou Jiangsu 215027 (CN); BASSETT, Alexander Anthony Denny, Suzhou Jiangsu Province 215000 (CN); ZHUANG, Wei, Suzhou (CN); AN, Pei, Suzhou (CN); LI, Jun Feng, Suzhou (CN)
(74) Representative: Chapman IP

(57) **Abstract**

A universal battery pack 10 capable of being attached to a plurality of different appliances 26,29 in respective different ways. The battery pack 10 has a housing which contains at least one rechargeable battery, the housing having a bottom wall 11 and first and second end walls 12,15 extending from respective ends of the bottom wall 11, electrical outlet contacts 17 and mounting formations 18 are disposed at or adjacent an intersection between the bottom wall 11 and the first end wall 12. The appliance 26,29 comprises a coding key array adapted to cooperate with a coding key array 24,25 of the battery pack 10 to prevent the contacts 17 of the battery pack mating with complementary contacts of the appliance when the battery pack is of an unsuitable voltage for the appliance.

## Description

This invention relates to a rechargeable battery pack.

Many commercial and domestic appliances are powered by rechargeable batteries. Sometimes such batteries are permanently enclosed within the appliance, which is undesirable if the battery needs to be replaced. Also, with such appliances, the user has to inconveniently wait for the battery to recharge before the appliance can be used again.

In order to solve the above-mentioned problems, it is well known to provide appliances with rechargeable battery packs which can be detached and recharged or replaced. Also, if users have more than one battery, they can simply exchange an exhausted battery for a charged one so that they can use the appliance again. The exhausted battery can then be recharged.

Manufacturers of a range of appliances will generally produce a bespoke battery pack for each appliance, which are designed to meet the ergonomic needs of the appliance and supply the correct voltage. This situation is clearly problematic for manufacturers because they have to go to the expense of manufacturing and stocking many different kinds of battery packs. This situation is also problematic for users because it can be difficult to determine which is the correct battery pack for their appliance, especially if they have more than one appliance. Also, a user will need to have at least two batteries packs of each type, which is both expensive and inconvenient in terms of storage.

With the above objectives in mind, we have now devised a universal battery pack which can fit a variety of appliances.

In accordance with the present invention, there is provided a rechargeable battery pack capable of being attached to a plurality of different appliances in respective different ways, the battery pack comprising a housing which contains at least one rechargeable battery, the housing having a bottom wall and first and second end walls extending from respective ends of the bottom wall, electrical outlet contacts disposed at or adjacent an intersection between said bottom wall and said first end wall, and a mounting formation disposed at or adjacent an intersection between said bottom wall and a said end wall.

In a first method of use, the battery pack is preferably adapted for sliding into a cavity in an appliance by inserting said first end wall foremost into the cavity such that the contacts mate with complementary contacts at the bottom of the cavity.

In a second method of use, the battery pack is preferably adapted for mounting on a surface of an appliance by engaging said mounting formation with a complementary formation on the appliance and rotating the battery pack towards the appliance to bring the bottom surface thereof into face-to-face registration with the surface of the appliance, such that the contacts thereon mate with complementary contacts on the surface of the appliance.

In this manner, a single type of battery can be fitted in one of two ways depending on the ergonomics of the appliance.

The number of rechargeable batteries inside the housing may be varied according to the operating voltage of the appliance.

In order prevent an unsuitable battery being mounted to the appliance, a pair of coding key arrays are preferably disposed on said bottom and said first end wall respectively. In the first method of use, the coding key array on the end wall cooperates with a corresponding array at the bottom of the cavity and prevents the contacts from mating in the event that the battery is unsuitable for the appliance. In the second method of use, the coding key array on the bottom wall cooperates with a corresponding array on the surface of the appliance and prevents the contacts from mating in the event that the battery is unsuitable for the appliance.

Preferably, the pair of coding key arrays are identical.

Preferably the coding key comprises an array of formations for cooperating with complementary formations on the appliance.

Preferably the formations are arranged in a line.

Preferably the complementary formations comprise recesses on the battery and projections on the appliance or vice-versa.

Preferably the coding key arrays are arranged to prevent the contacts of the battery pack mating with the contacts of the appliance when the battery voltage is unsuitable for the rated voltage of the appliance.

Preferably the coding key arrays are arranged to prevent the contacts of the battery pack mating with the contacts of the appliance when the battery voltage is above the rated voltage of the appliance. Battery packs of an equal or lower voltage may be connected.

Alternatively or additionally, the coding key arrays may prevent a battery having a particular feature from being fitted to an appliance which does not support that feature of vice-versa.

Preferably, the number of formations in the array is n+1, where n equals the number of types of battery.

Preferably the mounting formation is disposed at or adjacent an intersection between said bottom wall and said first end wall.

Preferably the second end wall comprises a socket for receiving the plug of a battery charger. In either method of use, the second end wall is exposed and thus the user can conveniently charge the battery pack in-situ.

The second end wall may also be provided with a switch for turning the battery power on and off and/or a visual indicator of the battery charge.

Preferably the housing comprises a top wall, the top or bottom wall comprising a latching formation for engaging a latch of the appliance to hold the battery pack in-suit in said first mode of use.

Preferably the second end wall comprises a latching formation for engaging a latch of the appliance to hold the battery pack in-suit in said second mode of use.

In accordance with the present invention, there is also provided an assembly comprising a rechargeable battery pack as hereinbefore defined fitted to an appliance.

The appliance preferably comprises a coding key array adapted to cooperate with a said coding key array of the battery pack to prevent the contacts of the battery pack mating with complementary contacts of the appliance when the battery pack is unsuitable for the appliance, for example because of its voltage.

An embodiment of the present invention will now be described by way of an example only and with reference to the accompanying drawings, in which:
Figure 1 is a perspective view from the second end and above of a battery pack in accordance with the present invention;
Figure 2 is a perspective view from the first end and below of the battery pack of Figure 1;
Figures 3A and 3B are perspective view illustrating how the battery pack of Figure 1 is mounted to an appliance in a first method of use;
Figures 4A and 4B are perspective view illustrating how the battery pack of Figure 1 is mounted to an appliance in a second method of use;

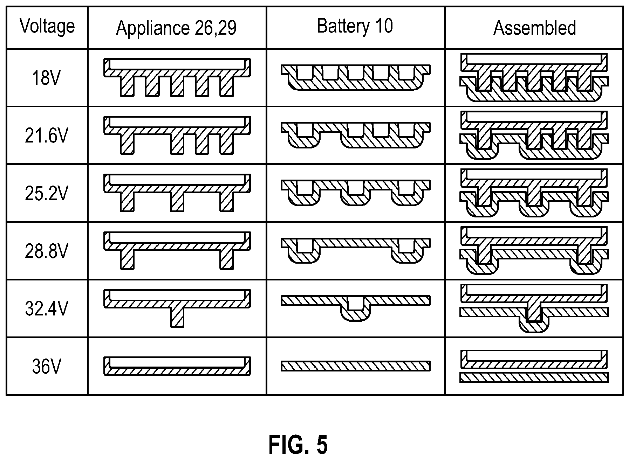

Figure 5 illustrates the different coding key arrays for five different battery voltages;
Figure 6 illustrates how battery packs of a voltage equal to or lower than 25.2 volts can be connected to an appliance having a rated voltage of 25.2 volts; and
Figure 7 illustrates how battery packs of a voltage above 25.2 volts cannot be connected to an appliance having a rated voltage of 25.2 volts.

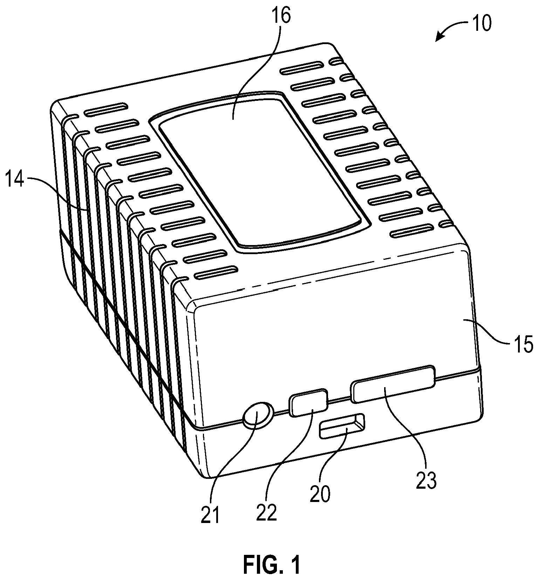

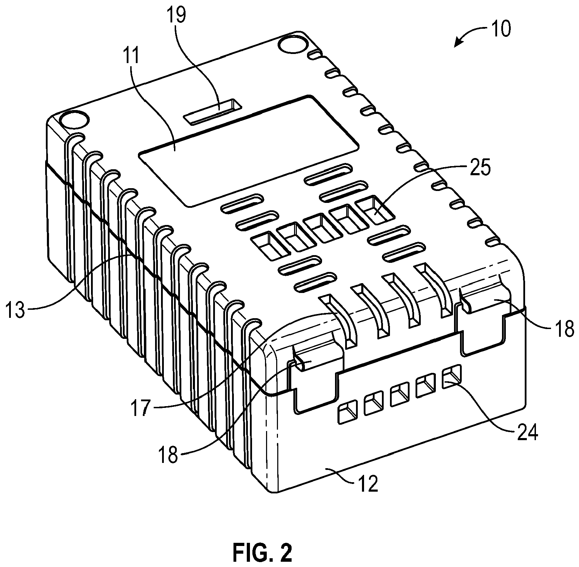

Referring to Figures 1 and 2 of the drawings, there is shown a battery pack 10 having a cuboid plastics housing which contains one or more rechargeable battery cells (not shown). The housing comprises a bottom wall 11, a first end wall 12, a right side wall 13, a left side wall 14, a second end wall 15 and a top wall 16.

A plurality of electrical contact terminals 17 are provided at the corner intersection between the bottom wall 11 and the first end wall 12. The contacts 17 are connected to the rechargeable battery cells and allow the cells to be charged and to supply power to an appliance to which the battery pack 10 is connected.

A pair of mounting formations 18 project from the corner intersection between the bottom wall 11 and the first end wall 12. A first locking recess 19 is provided in the bottom wall 11. A first locking recess 20 is provided in the second end wall 15. The second end wall 15 is provided with a socket 21 for receiving the plug of a battery charger. The second end wall 15 is also provided with a switch 22 for turning the battery power on and off and a visual indicator 23 for providing an indication of the state of charge of the battery pack 10.

A coding key array 24 is provided on the first end wall 12 of the housing. In the example shown, the array comprises a line of 5 recesses which, according to table 1 below, signify that the battery pack is an 18-volt battery pack. Progressively, fewer recesses are provided as the battery voltage increases.

**Table 1**

| | 18 volts | 21.6 volts | 25.2 volts | 28.8 volts | 32.4 volts | 36 volts |
|---|---|---|---|---|---|---|
| Number of recesses in battery pack | 5 | 4 | 3 | 2 | 1 | 0 |
| Number of protrusions on appliance | 5 | 4 | 3 | 2 | 1 | 0 |

Another identical coding key array 25 is provided on the bottom wall 11 of the housing.

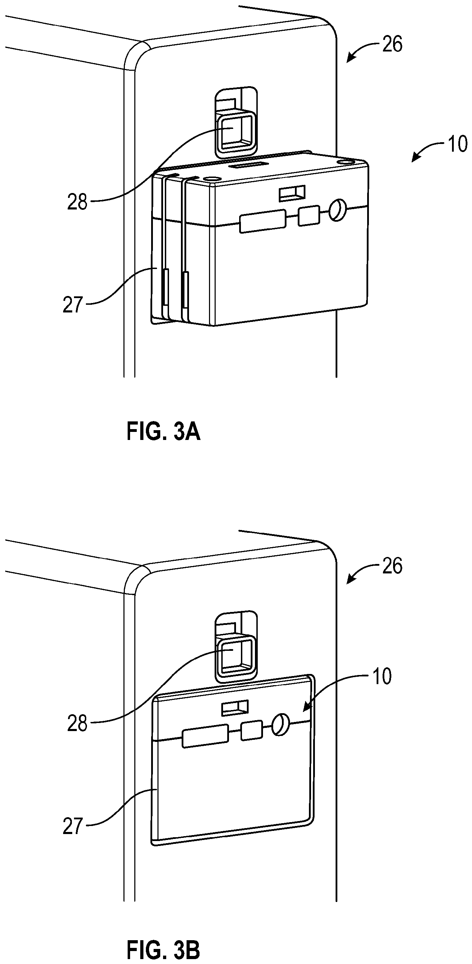

Referring to Figures 3A and 3B of the drawings, in a first method of use, the battery pack 10 can be slid into a cavity 27 in an appliance 26 by inserting the first end wall 12 foremost into the cavity 27 such that the contacts 17 mate with complementary contacts (not shown) at the bottom of the cavity 27. A catch 28 on the appliance 26 engages into the first locking recess 19 on the bottom wall 11 of the battery pack 10 to hold the battery pack 10 in-situ against a spring bias. The catch 28 can be released to eject the battery pack 10 from the cavity 27 under the spring bias.

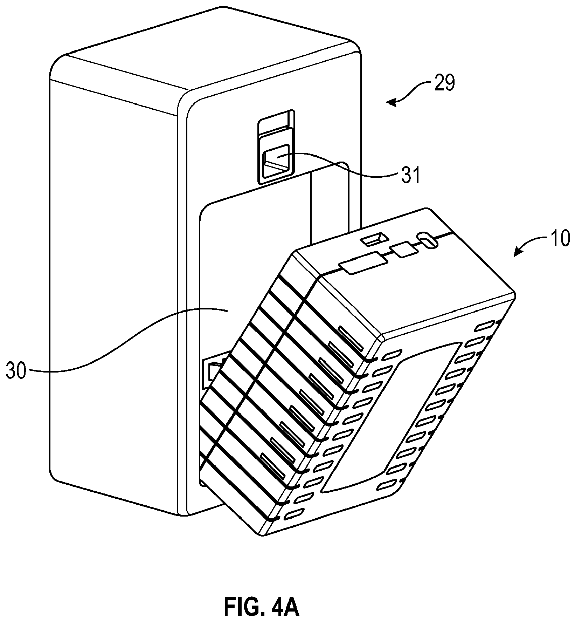

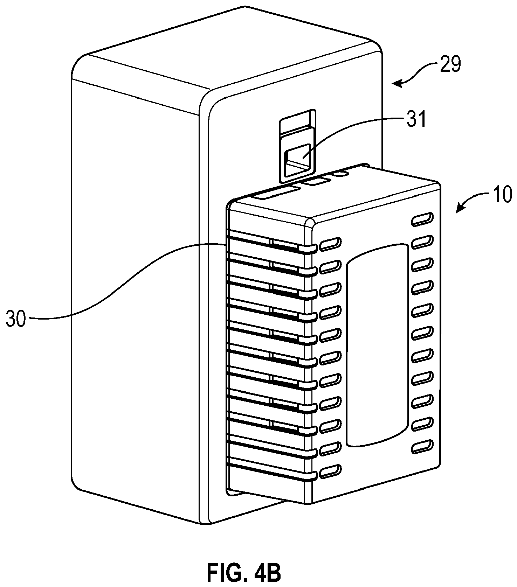

Referring to Figures 4A and 4B of the drawings, in second method of use, the battery pack 10 can be mounted in a shallow recess 30 formed on a surface of another appliance 29 by engaging the mounting formations 18 with complementary formations in the appliance recess 30. The battery pack 10 is then rotated towards relative to the appliance 29 to bring the bottom wall 11 thereof into face-to-face registration with the bottom of the appliance recess 30, such that the contacts 17 mate with complementary contacts (not shown) on the appliance 29. A catch 31 on the appliance 29 engages into the second locking recess 20 on the second end wall 15 of the battery pack 10 to hold the battery pack 10 in-situ. The catch 31 can be released to allow the battery pack 10 to be removed from the appliance 29.

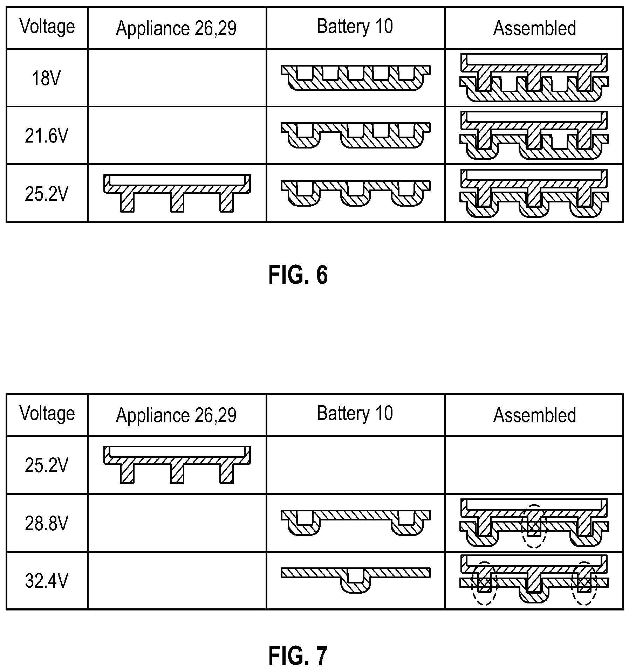

The operation of the coding key arrays 24,25 in preventing a battery pack 10 of an unsuitable voltage being connected to appliance 26,29 will now be explained with reference to Figures 6, 7 and 8 of the drawings. As mentioned above, with reference to table 1, the number of recesses of the arrays 24,25 corresponds with a respective battery voltage. Likewise, with reference to table 1, the number of protrusions on the appliance 26,29 corresponds with the respective operating voltage of the appliance. The protrusions are provided at the base of the cavity 27 and the bottom wall of the recess 30 in the appliances 26,29 respectively. The number (maximum 5) and location of the recesses in the arrays 24,25 of the battery pack is chosen for the various battery voltages in such a way that battery packs of voltage equal or lower than the rated voltage of the appliances 26,29 can be accommodated as shown in Figure 6 where it is shown that battery packs of 18, 21.6 and 25.2 volts can be fitted to an appliance 26,29 having an operating voltage of 25.2 volts.

However, installation of a higher voltage battery pack 10 is not possible as shown in Figure 7 where it is shown that battery packs of 28.8 and 32.4 volts cannot be fitted to an appliance 26,29 having an operating voltage of 25.2 volts.

A battery pack in accordance with the present invention is simple and inexpensive in construction yet can be fitted in 2 different ways to respective appliances and provides the advantage that battery packs of an unsuitable voltage cannot be connected to an appliance.

## Claims

1. A rechargeable battery pack capable of being attached to a plurality of different appliances in respective different ways, the battery pack comprising a housing which contains at least one rechargeable battery, the housing having a bottom wall and first and second end walls extending from respective ends of the bottom wall, electrical outlet contacts disposed at or adjacent an intersection between said bottom wall and said first end wall, and a mounting formation disposed at or adjacent an intersection between said bottom wall and a said end wall.

2. A rechargeable battery pack as claimed in claim 1, in which the battery pack is adapted for sliding into a cavity in an appliance by inserting said first end wall foremost into the cavity such that the contacts mate with complementary contacts at the bottom of the cavity of the appliance.

3. A rechargeable battery pack as claimed in claim 2, in which the battery pack is adapted for mounting on a surface of an appliance by engaging said mounting formation with a complementary formation on the appliance and rotating the battery pack towards the appliance to bring the bottom surface thereof into face-to-face registration with the surface of the appliance, such that the contacts thereon mate with complementary contacts on the surface of the appliance.

4. A rechargeable battery pack as claimed in any preceding claim, in which a pair of coding key arrays are disposed on said bottom and said first end wall respectively to prevent the contacts of the battery pack mating with contacts of the appliance when the battery is unsuitable for the appliance.

5. A rechargeable battery pack as claimed in claim 4, in which the coding key arrays comprise formations for cooperating with corresponding projections on the appliance.

6. A rechargeable battery pack as claimed in claim 5, in which the corresponding coding key arrays on the battery and appliance comprise projections and recesses.

7. A rechargeable battery pack as claimed in any of claims 4 to 6, in which the coding key arrays are arranged to prevent the contacts of the battery pack mating with the contacts of the appliance when the battery voltage is unsuitable for the rated voltage of the appliance.

8. A rechargeable battery pack as claimed in any of claims 4 to 7, in which the coding key arrays are arranged to prevent the contacts of the battery pack mating with the contacts of the appliance when the battery voltage is above the rated voltage of the appliance.

9. A rechargeable battery pack as claimed in claim 5, in which the number of formations in the array is n+1, where n equals the number of types of battery.

10. A rechargeable battery pack as claimed in claim 2, in which the coding key arrays are arranged to prevent the contacts of the battery pack mating with the contacts of the appliance when the battery voltage is above the rated voltage of the appliance.

11. A rechargeable battery pack as claimed in any preceding claim, in which the mounting formation is disposed at or adjacent an intersection between said bottom wall and said first end wall.

12. A rechargeable battery pack as claimed in any preceding claim, in which the second end wall comprises a socket for receiving the plug of a battery charger.

13. A rechargeable battery pack as claimed in any preceding claim, in which second end wall comprises a switch for turning the battery power on and off and/or a visual indicator of the battery charge.

14. An assembly comprising a rechargeable battery pack as claimed in any preceding claim fitted to an appliance.

15. An assembly as claimed in claim 14, in which the battery comprises a coding key array, the appliance comprising a coding key array adapted to cooperate with a said coding key array of the battery pack to prevent the contacts of the battery pack mating with complementary contacts of the appliance when the battery pack is unsuitable for the appliance.
